# EUROPEAN PATENT SPECIFICATION

(11) **EP 2 393 977 B1**
(45) Date of publication and mention of the grant of the patent: **14.11.2012**
(21) Application number: 10719228.8
(22) Date of filing: 05.02.2010
(51) Int. Cl.: D06M 16/00, D06M 23/08, D06M 23/12, A01N 63/00

(54) **TEXTILE WITH BIOCONTROLLING PROPERTIES**
STOFF MIT BIOKONTROLLEIGENSCHAFTEN
TEXTILE PRÉSENTANT DES PROPRIÉTÉS DE LUTTE BIOLOGIQUE

(30) Priority: 06.02.2009 BE 200900069
(43) Date of publication of application: 14.12.2011
(73) Proprietor: Cruysberghs, Rudiger, 1130 Brussel (Haren) (BE)
(72) Inventor: Cruysberghs, Rudiger, 1130 Brussel (Haren) (BE)
(86) International application number: PCT/BE2010/000009
(87) International publication number: WO 2010/088745

(56) References cited:
- FR-A1- 2 811 864
- US-A- 4 948 586
- US-A1- 2002 164 775
- US-A1- 2003 126 688

## Description

The present invention concerns a textile with consortia of non-pathogenic bacteria, primarily aimed at fighting harmful, pathogenic micro-organisms as well as allergy-spreading organisms, arachnids and insects. Particularly, but not exclusively, it concerns a woven textile whereby a biocontrolling composition containing non-pathogenic bacteria of the Bacillus genus, in the form of capsules, such as nano- or microcapsules, is applied during the manufacturing process. Due to pressure and friction forces the non-pathogenic bacteria are slowly released, resulting in a long-term effect.

Within the scope of this invention, textiles are mainly understood to mean fabrics or wovens, including pile or distance fabrics, three-dimensional interweaving, but also non-wovens.

A fabric is created by having warp yarns and weft yarns interlace in accordance with a specific pattern. A pile fabric is created by weaving two flat fabrics on top of each other and connecting them with pile yarns. If this structure is maintained, a distance fabric is created. Three-dimensional interweaving is created by weaving a network with polyester fibres.

No weaving technique is used for non-wovens, but fibres or yarns are connected with each other at certain points. Within the scope of this invention, capsules, such as nano- or microcapsules, are understood to mean polymer structures built in such a manner that they enclose living micro-organisms. The living micro-organisms are hereby encapsulated, to bring about their effect at desired times. Nano- or microcapsules thus also include granulates, pellets and powders.

Allergic afflictions are caused by various allergens which can have various origins. Different micro-organisms hereby produce toxins underlying these afflictions. Pathogenic bacteria are a primary source.

House or dust mites, belonging to the class of arachnids, are another important culprit; they occur in great numbers in mattresses or bed linen for instance. The allergy is caused by mite excrements.

The use of sprays (biocides) with micro-organism-killing properties, such as bacteriocides or fungicides, but also sprays against house or dust mites, is currently known. Bed linen is treated with such a spray.

The main disadvantages of such techniques are that the use of chemical compositions may be harmful to man's health and that frequent use may result in undesired resistance in the organism due to mutations on the one hand, and that the effect and efficiency of the treatment depends on the quantity and frequency of spraying on the other hand.

The use of odour-spreading substances is also known in the state of the art. Visco-elastic coatings are hereby impregnated with these odorous substances, as described in DE202007001570U1.

However, the purpose in this case is not to fight harmful micro-organisms or insects in textiles.

On the other hand, the use of anti-allergy mattress covers is known in the state of the art. It concerns the use of a filter structure, preventing larger mites from penetrating.

It is known in the state of the art to apply bacteria to fibers of a fabric during manufacture.

US2002/0164775 describes a method for applying bacterial spores to a fabric to neutralize allergens. US2003/126688 concerns a solution for treating a fibrous material to control odor, by binding bacteria spores to said fibers.

According to WO03/071871, a biological active compound, such as a bactericide, but not living microorganisms, enclosed in microcapsules to bind to a fabric, is known. Said compound will diffuse through said microcapsule membrane.

None of these documents teach us alone or combined a composition to repel pathogenic bacteria by enclosing non-pathogenic bacteria with at least one additive in capsules, binding them to a fabric in order to liberate said non-pathogenic bacteria by vibrating or friction forces between said capsules.

This invention concerns a composition of nano- or microcapsules, containing gram-positive non-pathogenic bacteria of the Bacillus genus, applied in textile. These consortia of non-pathogenic bacteria of the Bacillus genus make spores, inhibiting their metabolism.

The non-pathogenic bacteria are encapsulated in an oil or biopolymer and are released under pressure, due to vibration or friction.

The slow release of the non-pathogenic bacteria ensures a long-term effect.

According to this invention, textile is mainly understood to mean mattresses, mattress covers, bed linen, but also clothing, carpets and rugs, as well as filtration materials or, in other words, all textiles whereby friction effects or vibrations within a textile result in the release of non-pathogenic bacteria and the breaking of the capsules.

A first advantage of this invention is that the application of capsules with non-pathogenic bacteria ensures a long-term and durable effect. The non-pathogenic bacteria are released due to pressure exerted on the capsules by a human body or due to vibrating forces, causing the capsules to rub against each other. A capsule is then broken, releasing the non-pathogenic bacteria.

A second advantage is that no harmful chemicals are used and that, in addition, the risk of resistance is prevented. These non-pathogenic bacteria thus ensure protection against harmful bacteria or micro-organisms, arachnids and some insects, which parasitise the human body.

A final advantage is that, because this invention does not require any additional dispenser, since the nano- or microcapsules are applied to the textile and preferably during the manufacturing process. This offers both economically and ecologically important advantages.

The present invention is detailed below. The invention uses non-pathogenic bacteria (GRAS), which are placed in capsules, such as nano- or microcapsules. Non-pathogenic bacteria of the Bacillus genus are used, particularly a mixture of Bacillus subtilis, Bacillus amyloliquefaciens, Bacillus licheniformis, Bacillus pumilis and Bacillus megaterium.

These bacteria are immobilised and encapsulated in their **living** form.

Non-pathogenic bacteria are encapsulated in their **living** form by using aqueous solutions with biopolymers for instance, such as alginate, polyacrylamide, carragen, agar, agarose, collagen, gelatine, fibrinogen, chitosan..., forming a gel. On the other hand, these capsules can also be made from synthetic polymers, such as PU. Furthermore, the capsules may contain oils, including water-in-oil emulsions. Vegetative or mineral oils or mixtures of both may be used. This includes for instance mono, di- and/or triglycerides.

Depending on the condition the micro-organisms are in, **living** form, additives such as vitamins, buffers, surfactants, sugars, preservatives... may be added.

In another possible embodiment the living non-pathogenic bacteria are put in a Ca or polyphosphate solution, or preservatives such as certain acid solutions are added. This allows the non-pathogenic bacteria to survive for a long time. The **living** non-pathogenic bacteria which are encapsulated, are subsequently applied in a textile. The textile consists of natural or synthetic fibres or yarns. These yarns or fibres are made into the desired textile, by means of a weaving technique or a non-woven technique. Depending on the purpose, use and properties of the fibres, the textile is manufactured in accordance with a specific technique. This invention mainly concerns textile which come into contact with the human body, such as bed linen, clothing, mattresses, sitting furniture, including chairs, seats and sofa's on the one hand, and which have a cleaning function, such as filters and floor mats, on the other hand.

The capsules are anchored in the textile by means of covalent bonds, using grafting or ligands. The number or amount of capsules mainly depends on the density of the fibre or fabric structure.

The size of the capsules is such that they are wedged within the yarns or fibres of the textile.

Below, several possible embodiments are discussed in greater detail.

With a mattress, the nano- or microcapsules are applied in the fabric and in such a manner that the movement of the human body against the contact surface of the mattress causes the capsules to release the non-pathogenic bacteria of the Bacillus genus, as a result of mutual friction forces and friction with the yarns or fibres.

The capsules can be applied between two fabric structures, as for instance in a distance fabric.

With three-dimensional interweaving, the capsules are put in between the network of fibres. The amount and distribution of the capsules mainly depends on the density of the network or fabric structure.

With floor mats, to wipe shoes, the capsules are broken by contact with the shoes, releasing micro-organisms. With gas filters, for instance in air-conditioning units, a layered textile is applied in the filter housing between which the capsules containing non-pathogenic bacteria are applied. The air flow causes vibrations between the capsules which, when broken, release the necessary non-pathogenic bacteria which are distributed in the aircon unit.

With another possible embodiment the capsules are applied in a non-woven filter structure. While manufacturing non-woven, the capsules are distributed between the fibres and included in the matrix.

## Claims

1. A fabric with bio-controlling mean, comprising a fiber or woven textile structure with a mixture of non-pathogenic bacteria, B. subtilis, B. amyloliquefaciens, B. licheniformis, B. pumilis and B. megaterium and **characterized in that** the applied bacterial strains are living bacteria, enclosed in capsules with at least one additive and whereby said capsules are provided on said textile by covalent bonds in order to liberate said bacteria by friction forces between said capsules.

2. A fabric with bio-controlling means according to claim 1 **and characterized in that** said capsules with bacteria are fixed by grafting or ligands.

## Patentansprüche

1. Ein Gewebe mit bio-kontrollierenden Mitteln, das eine Faser- oder gewebte Textilstruktur mit einer Mischung nicht pathogener Bakterien, B. subtilis, B. amyloliquefaciens, B. licheniformis, B. pumilis und B. megaterium, umfasst **und das darin charakterisiert ist, dass** die eingesetzten Bakterienstämme lebende Bakterien sind, die in Kapseln mit mindestens einem Zusatzstoff eingeschlossen sind, und wobei die besagten, erfindungsgemäßen Kapseln auf dem besagten Textil durch kovalente Bindungen bereitgestellt werden, um die besagten Bakterien durch Reibungskräfte zwischen den besagten Kapseln freizusetzen.

2. Ein Gewebe mit bio-kontrollierenden Mitteln gemäß Anspruch 1, **und das darin charakterisiert ist, dass** die besagten Kapseln mit Bakterien durch Transplantation oder Liganden fixiert sind.

## Revendications

1. Tissu doté de moyens de lutte biologique, comprenant une structure textile tissée ou à fibres comportant un mélange de bactéries non pathogènes, B. subtilis, B. amyloliquefaciens, B. licheniformis, B. pumilis et B. megaterium, **et caractérisé en ce que** les souches bactériennes déposées sont des bactéries vivantes, enfermées dans des capsules avec au moins un additif, et de sorte que lesdites capsules sont déposées sur ledit textile par des liaisons covalentes afin.de libérer lesdites bactéries par forces de frottement entre lesdites capsules.

2. Tissu doté de moyens de lutte biologique selon la revendication 1 **et caractérisé en ce que** lesdites capsules comportant des bactéries sont fixées par greffe ou par des ligands.
